# EUROPÄISCHE PATENTSCHRIFT

(11) **EP 1 174 447 B1**
(45) Veröffentlichungstag und Bekanntmachung des Hinweises auf die Patenterteilung: **20.11.2002**
(21) Anmeldenummer: 01114704.8
(22) Anmeldetag: 21.06.2001
(51) Int. Cl.: C08F 218/04, C08F 263/04

(54) **Verfahren zur Herstellung von zweiphasigen Polymerisaten in Form deren wässrigen Polymerdispersionen und in Wasser redispergierbaren Polymerpulver**
Process for preparing aqueous dispersions of biphasic polymers and polymer powders redispersibles in water
Procédé de polymérisation de dispersions aqueuses de polymères biphasiques ainsi que de poudres de polymères redispersables dans l'eau

(30) Priorität: 21.07.2000 DE 10035588
(43) Veröffentlichungstag der Anmeldung: 23.01.2002
(73) Patentinhaber: Wacker Polymer Systems GmbH & Co. KG, 84489 Burghausen (DE)
(72) Erfinder: Weitzel, Hans-Peter Dr., 84571 Reischach (DE)
(74) Vertreter: Schuderer, Michael, Dr.

(56) Entgegenhaltungen:
- DE-A- 19 853 461
- US-A- 4 164 489
- US-A- 5 135 988
- US-A- 5 747 578
- US-A- 5 756 573

## Beschreibung

Die Erfindung betrifft ein Verfahren zur Herstellung von zweiphasigen Polymerisaten auf Basis von Vinylester und Ethylen in Form deren wässrigen Polymerdispersionen oder in Wasser redispergierbaren Polymerpulver mittels radikalisch initiierter Emulsionspolymerisation oder Suspensionspolymerisation von einem oder mehreren Monomeren aus der Gruppe der Vinylester von Carbonsäuren mit 1 bis 12 C-Atomen, Ethylen und gegebenenfalls weiteren damit copolymerisierbaren Monomeren, in Gegenwart von einem oder mehreren Schutzkolloiden und/oder Emulgatoren, und gegebenenfalls Trocknung der damit erhaltenen wässrigen Polymerdispersion.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate, zum Beispiel als zementäre Fliesenkleber, eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit, beispielsweise verbesserte Haftzugswerte im Fliesenkleber, beiträgt. Für Anwendungen im Coating-/Anstrichbereich, beispielsweise in Innenfarben, Außenfarben, Putzen, werden hingegen häufig emulgator- oder cellulosestabiliserte Dispersionen aus rheologischen Gründen bevorzugt.

Als Monomere zur Herstellung von redispergierbaren Pulvern werden bisher bevorzugt Vinylester und Ethylen eingesetzt, da die Stabilisierung von Acrylatcopolymeren oder Styrolacrylatcopolymeren oder Styrol-Butadiencopolymeren durch Polyvinylalkohol nicht so einfach zu bewerkstelligen ist. Insbesondere ist es nicht trivial eine Acrylatdispersion alleinig mit Polyvinylalkohol so zu stabilisieren, daß die daraus resultierenden Pulver block- bzw. lagerstabil sind. Andererseits liefern diese Monomerkombinationen naturgemäß aufgrund ihrer hydrophoben Natur gute Festigkeiten im Fliesenkleber nach Naßlagerung und sind wenig verseifungsanfällig.

Bei Verwendung der Kombination Vinylester mit Ethylen ist für die Einstellung der Verseifungsstabilität ein hoher Ethylengehalt notwendig, wodurch die Tg abgesenkt wird. Dies kann zu Beeinträchtigungen in der Haftzugfestigkeit der Fliesenkleber insbesondere nach Wärmelagerung führen. Wünschenswert ist aber ein konstantes und hohes Niveau (mindestens 0.5 N/mm²) der Haftzugfestigkeiten im Fliesenkleber nach allen Lagerungen, sei es im Trockenen, Nassen, bei Wärme oder Frost. Wünschenswert sind außerdem hohe Flexibilitäten bei gleichzeitig hohen Festigkeiten, was einen inhärenten Widerspruch darstellt. Für hohe Flexibilität wird ein Harz mit niedriger Tg, für hohe Festigkeit ein Harz mit hoher Tg benötigt. Vergleichbare Forderungen resultieren aus dem Coatingsektor, wo bei Innenfarben gute Naßabriebsbeständigkeit und gleichzeitig niedrige Mindestfilmbildetemperatur verlangt werden. Für Glanzfarben wird hoher Glanz und geringe Blockneigung gefordert.

Probleme können nicht nur bei der Herstellung sondern auch bei der Anwendung der gewünschten Produkte auftreten. Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität). In der Beton- und Mörtelindustrie spielen darüberhinaus die mechanischen Eigenschaften, wie die Druckfestigkeit, die Porosität und damit der Luftporengehalt eine wesentliche Rolle. Sind zu viele Luftporen vorhanden, so sinkt die Druckfestigkeit stark ab, sind zu wenig oder keine Luftporen im Mörtel oder Beton vorhanden, ist der Baustoff nicht genügend Frost/Tau-stabil. Die mit dem Dispersionspulver vergüteten hydraulisch abbindenden Systeme sollen zudem noch bessere Haftung gegenüber den unvergüteten Systemen erbringen.

Im Stand der Technik sind folgende Schriften zur Behebung der eben genannten Problematik vorzufinden. Die DE-A 4431343 betrifft heterogene Polyvinylester-Dispersionen und Polyvinylester-Pulver, welche eine Mischung aus einem harten Vinylesterpolymerisat und einem weichen Vinylester-Ethylen-Copolymerisat enthalten. Die Herstellung der heterogenen Dispersionen erfolgt durch Mischen der entsprechenden Polymerdispersionen, welche gegebenenfalls anschließend zu Pulvern getrocknet werden können.

In der DE-A 19739936 wird eine Vorgehensweise beschrieben, bei der zunächst ein weiches Vinylester-Ethylen-Copolymerisat in wässriger Dispersion hergestellt wird. Diese Vinylester-Ethylen-Copolymer-Dispersion wird dann als Saatlatex bei der Polymerisation eines harten Vinylesterpolymers eingesetzt.

In der DE-A 19528380 werden zweiphasige Vinylacetat-Ethylen-Copolymere in der Weise erzeugt, daß zu Beginn der Polymerisation ethylenreiche Copolymerphasen und im späteren Verlauf der Polymerisation ethylenarme Copolymerphasen hergestellt werden. Es wird angestrebt möglichst viel Ethylen zu copolymerisieren, ohne daß sich kristalline Polymerphasen entwickeln. Diesen Copolymerisaten mangelt es allerdings an den gewünschten hohen Festigkeiten des Polymerfilms, und es handelt sich um extrem weiche Copolymerisate.

Die DE-A 19853461 beschreibt ein Verfahren zur Herstellung von Vinylacetat-Ethylen-Copolymerisaten mit Kern-Schale-Morphologie bei dem nach der 1. Stufe das Verfahren durch Kühlen unterbrochen wird, und die 2. Stufe neu gestartet wird. Dieses Verfahren hat sowohl aus energetischen Gesichtspunkten Nachteile, als auch wegen des höheren Zeitbedarfs.

Der Erfindung lag somit die Aufgabe zugrunde, eine stabile Dispersion und entsprechende in Wasser redispergierbare Dispersionspulver auf Basis von Monomeren aus der Gruppe der Vinylester und Ethylen zur Verfügung zu stellen, die vor allem beim Einsatz in zementären Anwendungen eine voll befriedigende Viskositäts- bzw. Zementstabilität besitzen, und das Zementabbinden nicht behindern und gleichzeitig hohe Elastizität und hohe Festigkeit zur Verfügung stellen. Die Polymerisate sollten mit einem Verfahren zugänglich werden, bei dem auch ohne Unterbrechung der Polymerisation zweiphasige Polymerisate erhalten werden können. Aufgabe war es weiterhin Pulver zur Verfügung zu stellen, die bessere und gleichmäßigere Haftzugfestigkeiten nach allen Lagerungen zeigen. Aufgabe war es weiterhin Dispersionen zur Verfügung zu stellen, die verbesserte Naßabriebsbeständigkeit bei niedrigen Filmbildetemperaturen zeigen.

Gegenstand der Erfindung ist ein Verfahren zur Herstellung von zweiphasigen Polymerisaten auf Basis von Vinylester und Ethylen in Form deren wässrigen Polymerdispersionen oder in Wasser redispergierbaren Polymerpulver mittels radikalisch initiierter Emulsionspolymerisation oder Suspensionspolymerisation von einem oder mehreren Monomeren aus der Gruppe der Vinylester von Carbonsäuren mit 1 bis 12 C-Atomen, Ethylen und gegebenenfalls weiteren damit copolymerisierbaren Monomeren, in Gegenwart von einem oder mehreren Schutzkolloiden und/oder Emulgatoren, und gegebenenfalls Trocknung der damit erhaltenen wässrigen Polymerdispersion, dadurch gekennzeichnet, daß
in einer ersten Polymerisationsphase bei niedrigem Ethylendruck von p ≤ 20 bar gearbeitet wird und der Druck in einer zweiten Polymerisationsphase auf einen Wert von 20 bar < p < 60 bar erhöht wird,
wobei eine Ethylenverteilung im Polymer von < 50 Gew.-% in der ersten Polymerisationsphase und von > 50 Gew.-% in der zweiten Polymerisationsphase, jeweils bezogen auf die Gesamtmenge des eingesetzten Ethylens, eingestellt wird.

Geeignete Vinylester sind solche von Carbonsäuren mit 1 bis 12 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat. Die genannten Vinylester werden im allgemeinen in einer Menge von 30 bis 97 Gew.-%, vorzugsweise 70 bis 95 Gew.-%, jeweils bezogen auf das Gesamtgewicht der Monomere, copolymerisiert.

Ethylen wird im allgemeinen in einer Menge von 3 bis 30 Gew.-%, vorzugsweise 3 bis 15 Gew.-%, jeweils bezogen auf das Gesamtgewicht der Monomere, copolymerisiert.

Geeignete weitere Comonomeren sind solche aus der Gruppe der Ester der Acrylsäure oder Methacrylsäure, der Vinylhalogenide wie Vinylchlorid, der Olefine wie Propylen. Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat. Diese Comonomere werden gegebenenfalls in einer Menge von 1 bis 40 Gew.-%, bezogen auf das Gesamtgewicht der Monomere, copolymerisiert.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Comonomergemische von Vinylacetat mit 3 bis 30 Gew.-% Ethylen; sowie
Comonomermischungen von Vinylacetat mit 3 bis 30 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und
Gemische von Vinylacetat, 3 bis 30 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Gemische mit 30 bis 75 Gew.-% Vinylacetat, 1 bis 50 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 3 bis 30 Gew.-% Ethylen enthalten;
sowie Gemische mit Vinylacetat, 3 bis 30 Gew.-% Ethylen und 1 bis 30 Gew.-% Vinylchlorid; wobei
die Gemische noch die genannten Hilfsmonomere in den genannten Mengen enthalten können, und sich die Angaben in Gew.-% auf jeweils 100 Gew.-% aufaddieren.

Die Herstellung erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und (Iso-)Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit weiteren Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015). Geeignet sind auch teilverseifte, hydrophob modifizierte Polyvinylalkohole mit einem Hydrolysegrad von 80 bis 95 Mol% und einer Höpplerviskosität in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten, alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere geeignete Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd, erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20°C, DIN 53015). Die genannten Schutzkolloide sind mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt.

Bei dem erfindungsgemäßen Verfahren kann auch in Gegenwart von Emulgatoren polymerisiert werden, wobei die Mengen an Emulgator im allgemeinen 1 bis 5 Gew.-%, bezogen auf die Monomermenge, betragen. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Bei der Polymerisation wird in einer ersten Polymerisationsphase bei niedrigem Ethylendruck von ≤ 20 bar, vorzugsweise 5 bis 20 bar, gearbeitet, und der Druck in einer zweiten Polymerisationsphase auf einen Wert von 20 bar < p < 60 bar, vorzugsweise 25 bar bis 55 bar, erhöht. Dadurch wird bewirkt, daß das Ethylen so im Polymer verteilt ist, daß mehr als 50 Gew.-% der Gesamtethylenmenge, in der zweiten Polymerisationsphase eingebaut werden, das heißt in der zweiten Polymerisationsphase die ethylenreichere Polymerphase gebildet wird. Im allgemeinen werden in der ersten Phase der Polymerisation Vinylester-Ethylen-Copolymerphasen mit einem Ethylengehalt von 2 bis 10 Gew.-%, und in der zweiten Phase der Polymerisation Vinylester-Ethylen-Copolymerphasen mit einem Ethylengehalt von 10 bis 30 Gew.-% gebildet.

Durch diese Maßnahme wird die Polymerisation so geführt, daß zuerst ein Polymer mit einer Tg > X°C entsteht, im weiteren Verlauf dann ein Polymer mit einer Tg < X°C. Bevorzugt liegt diese Grenze X bei 10°C, besonders bevorzugt bei 15°C. Die beiden Polymerphasen unterscheiden sich bezüglich deren Tg so, daß vorzugsweise die Tg-Differenz 5°C bis 30°C beträgt. Die beiden Polymerphasen liegen statistisch verteilt über alle Volumenelemente der Polymerpartikel vor. Die in der ersten Phase gebildete Polymerphase stellt vorzugsweise maximal 60 Gew.-%, insbesondere 30 bis 60 Gew.-%, des Gesamtpolymerisats.

Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt. Bei geringen Differenzen in der Tg kann dies vielfach meßtechnisch nicht aufgelöst bzw. nachgewiesen werden, sondern nur durch die Monomerzusammensetzung und Berücksichtigung der Fox-Gleichung errechnet werden.

Die weiteren Monomere, insbesondere die Vinylestermonomere, können insgesamt vorgelegt werden, insgesamt zudosiert werden oder in Anteilen vorgelegt werden und der Rest nach der Initiierung der Polymerisation zudosiert werden. Vorzugsweise wird so vorgegangen, daß 20 bis 100 Gew.-%, besonders bevorzugt 50 bis 100 Gew.-%, bezogen auf das Gesamtgewicht der Monomere vorgelegt wird und der Rest zudosiert wird. Die Dosierungen können separat (räumlich und zeitlich) durchgeführt werden oder die zu dosierenden Komponenten können alle oder teilweise voremulgiert dosiert werden. Die Hilfsmonomeren können abhängig von ihrer chemischen Natur ebenfalls vollständig vorgelegt oder dosiert werden. Auch teilweise Vorlage oder Dosierung ist möglich. Bei Vinylacetatpolymerisationen werden die Hilfsmonomere in Abhängkeit ihrer Copolymerisationsparameter dosiert oder vorgelegt. Acrylsäurederivate beispielsweise werden dosiert, während Vinylsulfonat vorgelegt werden kann.

Der Monomerumsatz wird mit der Initiatordosierung gesteuert. Die Initiatoren werden insgesamt zudosiert. Der Schutzkolloid-Anteil bzw. Emulgatoranteil kann sowohl vollständig vorgelegt, als auch teilweise vorgelegt und teilweise zudosiert werden. Vorzugsweise werden mindestens 5 Gew.-% des Schutzkolloids vorgelegt, am meisten bevorzugt wird der Schutzkolloid-Anteil vollständig vorgelegt.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%. Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- bzw. Bindemittel für Textilien und Papier.

Die nachfolgenden Beispiele dienen der weiteren Erläuterung der Erfindung:

### Beispiel 1:

In einen 600 l Autoklaven wurden 152 kg deionisiertes Wasser, 116 kg einer 20 %-igen wässrigen Lösung eines Polyvinylalkohols mit einem Hydrolysegrad von 88 Mol-% und einer Viskosität nach Höppler von 4 mPas sowie 232 kg Vinylacetat vorgelegt. Der pH-Wert wurde mit Ameisensäure auf 4.0 eingestellt und der Autoklav evakuiert. Anschließend wurden bei 55°C 10 bar Ethylen aufgedrückt, was einer Ethylenmenge von 10 kg entspricht.
Zum Starten der Polymerisation wurden die Initiatordosierungen, 3 %-ige wässrige tert.-Butylhydroperoxid-Lösung und 5 %-ige wässrige Ascorbinsäure-Lösung, mit je 750 g/h dosiert. Die Innentemperatur wurde durch externe Kühlung auf 75°C begrenzt. 60 Minuten nach Reaktionsbeginn wurde der Ethylendruck auf 50 bar erhöht und mit der Dosierung von Vinylacetat begonnen. 57.8 kg Vinylacetat wurden mit einer Rate von 38.5 kg/h dosiert. Ethylen wurde bis zu einer Menge von 30 kg nachdosiert. Nach Beendigung der Reaktion wurde gekühlt, überschüssiges Ethylen entspannt und das Polymerisat zur Entfernung von Restmonomer nachpolymerisiert. Zur Nachpolymerisation wurden nacheinander 1100 g tert.-Butylhydroperoxid, als 10 %-ige wässrige Lösung, und 2200 g Ascorbinsäure, als 5 %-ige wässrige Lösung, zugegeben. Anschließend wurde die Dispersion über ein 500 µm Sieb abgefüllt.

| Es wurde eine Dispersion mit folgenden Kenndaten erhalten: | |
|---|---|
| Feststoffgehalt | 55.6 % |
| Viskosität (Brookfield 20Upm) | 410 mPas |
| pH | 3.9 |
| Mindestfilmbildetemperatur | 3°C |
| Tg | 14°C |

### Vergleichsbeispiel 2:

Analog der Vorgehensweise in Beispiel 1 wurde eine Dispersion hergestellt, mit dem Unterschied, daß die Ethylenmenge wie folgt verteilt wurde: Vorlage 20 bar/17 kg, Dosierung 40 bar/13 kg.

| Es wurde eine Dispersion mit folgenden Kenndaten erhalten: | |
|---|---|
| Feststoffgehalt | 55.4 % |
| Viskosität (Brookfield 20Upm) | 486 mPas |
| pH | 3.9 |
| Mindestfilmbildetemperatur | 5.5°C |
| Tg | 17°C |

### Beispiel 3:

Analog der Vorgehensweise in Beispiel 1 wurde eine Dispersion hergestellt, mit dem Unterschied, daß die Ethylenmenge wie folgt verteilt wurde: Vorlage 13 bar/13 kg, Dosierung 45 bar/17 kg.

| Es wurde eine Dispersion mit folgenden Kenndaten erhalten: | |
|---|---|
| Feststoffgehalt | 55.2 % |
| Viskosität (Brookfield 20Upm) | 395 mPas |
| pH | 3.7 |
| Mindestfilmbildetemperatur | 5°C |
| Tg | 19°C |

### Beispiel 4:

Analog der Vorgehensweise in Beispiel 1 wurde eine Dispersion hergestellt, mit dem Unterschied, daß die Ethylenmenge wie folgt verteilt wurde: Vorlage 8 bar/7 kg, Dosierung 55 bar/23 kg.

| Es wurde eine Dispersion mit folgenden Kenndaten erhalten: | |
|---|---|
| Feststoffgehalt | 55.8 % |
| Viskosität (Brookfield 20 Upm) | 483 mPas |
| pH | 3.8 |
| Mindestfilmbildetemperatur | 6°C |
| Tg | 20°C |

### Vergleichsbeispiel 5:

Analog der Vorgehensweise in Beispiel 1 wurde eine Dispersion hergestellt, mit dem Unterschied, daß die Ethylenmenge wie folgt verteilt wurde: Vorlage 21 bar/20 kg, Dosierung 38 bar/10 kg.

| Es wurde eine Dispersion mit folgenden Kenndaten erhalten: | |
|---|---|
| Feststoffgehalt | 57.3 % |
| Viskosität (Brookfield 20Upm) | 605 mPas |
| pH | 4.1 |
| Mindestfilmbildetemperatur | 6°C |
| Tg | 15°C |

### Vergleichsbeispiel 6:

Analog der Vorgehensweise in Beispiel 1 wurde eine Dispersion hergestellt, mit dem Unterschied, daß die Ethylenmenge wie folgt verteilt wurde: Vorlage 40 bar/28 kg, Dosierung 40 bar/2 kg.

| Es wurde eine Dispersion mit folgenden Kenndaten erhalten: | |
|---|---|
| Feststoffgehalt | 55.8 % |
| Viskosität (Brookfield 20Upm) | 505 mPas |
| pH | 4.2 |
| Mindestfilmbildetemperatur | 6.5°C |
| Tg | 16°C |

### Beispiel 7:

Analog der Vorgehensweise in Beispiel 1 wurde eine Dispersion hergestellt, mit dem Unterschied, daß die Ethylenmenge wie folgt verteilt wurde: Vorlage 18 bar/16 kg, Dosierung 50 bar/22 kg.
Außerdem wurde ein Teil des Vinylacetats durch VeoVa10 ersetzt. Diese Monomere wurden wie folgt eingesetzt:
In der Vorlage 174 kg Vinylacetat, und in der Dosierung 58 kg Vinylacetat und 58 kg VeoVa10.

| Es wurde eine Dispersion mit folgenden Kenndaten erhalten: | |
|---|---|
| Feststoffgehalt | 54.7 % |
| Viskosität (Brookfield 20Upm) | 1220 mPas |
| pH | 3.7 |
| Mindestfilmbildetemperatur | 5.5°C |
| Tg | -4°C/23°C |

### Vergleichsbeispiel 8:

Analog der Vorgehensweise in Beispiel 1 wurde eine Dispersion hergestellt, mit dem Unterschied, daß die Ethylenmenge wie folgt verteilt wurde: Vorlage 32 bar/23 kg, Dosierung 44 bar/15 kg.
Außerdem wurde ein Teil des Vinylacetats durch VeoVa10 ersetzt. Diese Monomere wurden wie folgt eingesetzt:
In der Vorlage 174 kg Vinylacetat und 58 kg VeoVa10. In der Dosierung 58 kg Vinylacetat.

| Es wurde eine Dispersion mit folgenden Kenndaten erhalten: | |
|---|---|
| Feststoffgehalt | 55.6 % |
| Viskosität (Brookfield 20Upm) | 950 mPas |
| pH | 4.1 |
| Mindestfilmbildetemperatur | 0°C |
| Tg | 3°C |

### Beispiel 9:

Analog der Vorgehensweise in Beispiel 1 wurde eine Dispersion hergestellt, mit dem Unterschied, daß die Ethylenmenge wie folgt verteilt wurde: Vorlage 17 bar/13 kg, Dosierung 55 bar/31 kg.
Zur Stabilisierung wurden 62 kg einer 20 %-igen Lösung eines Polyvinylalkohols mit einem Hydrolysegrad von 88 Mol-% und einer Viskosität nach Höppler von 4 mPas, und 41 kg einer 10 %igen Lösung eines Polyvinylalkohols mit einem Hydrolysegrad von 88 Mol-% und einer Viskosität nach Höppler von 25 mPas eingesetzt. Die Wassermenge in der Vorlage betrug 140 kg. 255 kg Vinylacetat wurden vollständig vorgelegt.

| Es wurde eine Dispersion mit folgenden Kenndaten erhalten: | |
|---|---|
| Feststoffgehalt | 50.0 % |
| Viskosität (Brookfield 20Upm) | 540 mPas |
| pH | 3.1 |
| Mindestfilmbildetemperatur | 5°C |
| Tg | 3°C/23°C |

### Vergleichsbeispiel 10:

Analog der Vorgehensweise in Beispiel 9 wurde eine Dispersion hergestellt, mit dem Unterschied, daß die Ethylenmenge wie folgt verteilt wurde: Vorlage 28 bar/25 kg, Dosierung 45 bar/19 kg.
Außerdem wurde ein Teil des Vinylacetats durch VeoVa10 ersetzt.
Diese Monomere wurden wie folgt eingesetzt: In der Vorlage 174 kg Vinylacetat. In der Dosierung 58 kg Vinylacetat und 58 kg VeoVa10.

| Es wurde eine Dispersion mit folgenden Kenndaten erhalten: | |
|---|---|
| Feststoffgehalt | 49.8 % |
| Viskosität (Brookfield 20Upm) | 615 mPas |
| pH | 3.4 |
| Mindestfilmbildetemperatur | 0°C |
| Tg | 10°C |

### Beispiel 11:

Analog der Vorgehensweise in Beispiel 1 wurde eine Dispersion hergestellt, mit dem Unterschied, daß die Ethylenmenge wie folgt verteilt wurde: Vorlage 9 bar/8 kg, Dosierung 55 bar/31 kg.
Zur Stabilisierung wurden 16 kg einer 28 %-igen Lösung eines Nonylphenolethoxylates mit 10 EO-Einheiten und 18 kg einer 25 %-igen Lösung eines Nonylphenolethoxylates mit 23 EO-Einheiten und 1.26 kg einer 20 %-igen Lösung eines Dodecylbenzolsulfonates und 71 kg einer 3.3 %-igen Lösung von Hydroxyethylcellulose und 1.8 kg einer 25 %-igen Lösung von Vinylsulfonat eingesetzt.
Die Wassermenge in der Vorlage betrug 102 kg. 52 kg Vinylacetat wurden vorgelegt, 210 kg wurden dosiert.

| Es wurde eine Dispersion mit folgenden Kenndaten erhalten: | |
|---|---|
| Feststoffgehalt | 55.0 % |
| Viskosität (Brookfield 20Upm) | 2340 mPas |
| pH | 3.7 |
| Mindestfilmbildetemperatur | 4°C |
| Tg | -1°C/22°C |

### Vergleichsbeispiel 12:

Analog der Vorgehensweise in Beispiel 1 wurde eine Dispersion hergestellt, mit dem Unterschied, daß die Ethylenmenge wie folgt verteilt wurde: Vorlage 35 bar/20 kg, Dosierung 35 bar/19 kg. Zur Stabilisierung wurden 16 kg einer 28 %-igen Lösung eines Nonylphenolethoxylates mit 10 EO-Einheiten und 18 kg einer 25 %-igen Lösung eines Nonylphenolethoxylates mit 23 EO-Einheiten und 1.26 kg einer 20 %-igen Lösung eines Dodecylbenzolsulfonates und 71 kg einer 3.3 %-igen Lösung von Hydroxyethylcellulose und 1.8 kg einer 25 %-igen Lösung von Vinylsulfonat eingesetzt. Die Wassermenge in der Vorlage betrug 102 kg. 52 kg Vinylacetat wurden vorgelegt, 210 kg wurden dosiert.

| Es wurde eine Dispersion mit folgenden Kenndaten erhalten: | |
|---|---|
| Feststoffgehalt | 56.4 % |
| Viskosität (Brookfield 20Upm) | 1690 mPas |
| pH | 3.9 |
| Mindestfilmbildetemperatur | 3°C |
| Tg | 12°C |

### Pulverherstellung:

Die Dispersionen aus den Beispielen bzw. Vergleichsbeispielen 1 bis 10 wurden mit 5 Gew.-% (fest/fest) Polyvinylalkohol mit einem Hydrolysegrad von 88 Mol-% und einer Viskosität nach Höppler von 4 mPas versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Redispergierverhalten R der Polymerfilme:

Aus den Dispersionen der genannten Beispielen (vor Sprühtrocknung) wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pipette jeweils ein Wassertropfen auf eine homogene Stelle des zu prüfenden Filmes aufgebracht, und nach 60 Sekunden Einwirkzeit der Wassertropfen mit der Fingerkuppe solange an der gleichen Stelle verrieben, bis die Glasplatte an dieser Stelle filmfrei war, der Film in Filmstücke zerfiel oder vollständig erhalten blieb.

Die Redispergierbarkeit der Polymerfilme wurde mit folgendem Bewertungsschema beurteilt:
Note 1: Film läßt sich durch leichtes Reiben sofort redispergieren oder redispergiert bereits selbständig;
Note 2: Film läßt sich durch Reiben redispergieren, wenig redispergierbare Filmstücke möglich;
Note 3: Film läßt sich nur durch kräftiges Reiben unter Bildung von Filmstücken redispergieren;
Note 4: Film läßt sich auch durch längeres kräftiges Reiben nicht redispergieren, sondern zerfällt in Filmstücke.

### Bestimmung der Blockfestigkeit B:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
- 1 =: sehr gute Blockstabilität
- 2 =: gute Blockstabilität
- 3 =: befriedigende Blockstabilität
- 4 =: nicht blockstabil, Pulver nach Zerdrücken nicht mehr rieselfähig.

### Bestimmung der Zementstabilität ZS:

| Es wurde eine Zementmischung der nachfolgenden Rezeptur angerührt: | |
|---|---|
| Portlandzement | 82.5 g |
| Calcit (CaCO₃) 10-40 mm | 75 g |
| Quarzsand 200-500 mm | 142 g |
| Dispersionspulver | 14.5 g |
| Wasser | 85 g |

Die Verarbeitbarkeit der Zementmischung wurde über einen Zeitraum von 2 Stunden beobachtet und qualitativ beurteilt.

Reißdehnung RD (%) und Reißfestigkeit RF (N/mm²) wurden an getrockneten Dispersionsfilmen einer Trockenschichtstärke von ca. 200 µm in einem Zugversuch nach DIN 53504 bestimmt.

Die Naßabriebsbeständigkeit (Beispiele 11 und Vergleichsbeispiel 12) wurde an Innenfarben bei einer Pigmentvolumenkonzentration PVK von 75 nach DIN 53778T2 bestimmt.

Der Prozentsatz an eingesetztem Ethylen, welcher in die erste Polymerphase eingebaut wird, wurde mittels Wiegen bestimmt.

Die erfindungsgemäßen Vorgehensweise führt durchweg zu gut redispergierbaren und zementstabilen Dispersionen bzw. Pulvern; die Pulver zeigen gute Block- und somit Lagerstabilitäten.

Die erfindungsgemäßen Dispersionen zeigen deutliche Verbesserungen in den Reißfestigkeiten - bei vergleichbarer Dehnung - gegenüber den Vergleichsdispersionen.
Die Naßabriebsbeständigkeit (Vergleich von Beispiel 11 mit Vergleichsbeispiel 12) wird durch die erfindungsgemäßen Bindemittel signifikant verbessert.
Die Prüfergebnisse sind in Tabelle 1 zusammengefaßt.

**Tabelle 1:**

| Bsp. | FG | pH | BF20 | MFT | Tg | E* | RD | RF | R | B | ZS |
|---|---|---|---|---|---|---|---|---|---|---|---|
| | % | | mPas | °C | °C | Gew% | % | N/mm² | | | |
| Bsp. 1 | 55.6 | 3.9 | 410 | 3 | 14 | 33.3 | 426 | 18.6 | 1 | 1 | ja |
| V.Bsp. 2 | 55.4 | 3.9 | 486 | 5.5 | 17 | 56.7 | 357 | 15.1 | 1 | 1 | ja |
| Bsp. 3 | 55.2 | 3.7 | 395 | 5 | 19 | 43.3 | 278 | 17.2 | 1 | 1 | ja |
| Bsp. 4 | 55.8 | 3.8 | 483 | 6 | 20 | 23.3 | 370 | 20.0 | 1 | 1 | ja |
| V.Bsp. 5 | 57.3 | 4.1 | 605 | 6 | 15 | 66.7 | 373 | 16.1 | 1 | 1 | ja |
| V.Bsp. 6 | 55.8 | 4.2 | 505 | 6.5 | 16 | 93.3 | 340 | 15.5 | 1 | 1 | ja |
| Bsp. 7 | 54.7 | 3.7 | 1220 | 5.5 | | 42.1 | 367 | 15.6 | 1 | 1 | ja |
| V.Bsp. 8 | 55.6 | 4.1 | 950 | 0 | 3 | 60.5 | 460 | 7.9 | 1 | 1 | ja |
| Bsp. 9 | 50.0 | 3.1 | 540 | 5 | | 29.5 | 409 | 21.3 | 1 | 1 | ja |
| V.Bsp. 10 | 49.8 | 3.4 | 615 | 0 | 10 | 56.8 | 470 | 16.3 | 1 | 1 | ja |
| | | | | | | | Naßabrieb (Zyklen) | | | | |
| Bsp. 11 | 55.0 | 3.7 | 2340 | 4 | | 20.5 | 2000 | | | | |
| V.Bsp. 12 | 56.4 | 3.9 | 1690 | 3 | 12 | 51.3 | 1200 | | | | |

| | | | | | | | | | | | |
|---|---|---|---|---|---|---|---|---|---|---|---|
| * Ethylenmenge in der Vorlage, bezogen auf Gesamtmenge Ethylen | | | | | | | | | | | |

## Patentansprüche

1. Verfahren zur Herstellung von zweiphasigen Polymerisaten auf Basis von Vinylester und Ethylen in Form deren wässrigen Polymerdispersionen oder in Wasser redispergierbaren Polymerpulver mittels radikalisch initiierter Emulsionspolymerisation oder Suspensionspolymerisation von einem oder mehreren Monomeren aus der Gruppe der Vinylester von Carbonsäuren mit 1 bis 12 C-Atomen, Ethylen und gegebenenfalls weiteren damit copolymerisierbaren Monomeren, in Gegenwart von einem oder mehreren Schutzkolloiden und/oder Emulgatoren, und gegebenenfalls Trocknung der damit erhaltenen wässrigen Polymerdispersion, **dadurch gekennzeichnet, daß**
in einer ersten Polymerisationsphase bei niedrigem Ethylendruck von p ≤ 20 bar gearbeitet wird und der Druck in einer zweiten Polymerisationsphase auf einen Wert von 20 bar < p < 60 bar erhöht wird,
wobei eine Ethylenverteilung im Polymer von < 50 Gew.-% in der ersten Polymerisationsphase und von > 50 Gew.-% in der zweiten Polymerisationsphase, jeweils bezogen auf die Gesamtmenge des eingesetzten Ethylens, eingestellt wird.

2. Verfahren nach Anspruch 1, **dadurch gekennzeichnet, daß** in der ersten Phase der Polymerisation Vinylester-Ethylen-Copolymerphasen mit einem Ethylengehalt von 2 bis 10 Gew.-%, und in der zweiten Phase der Polymerisation Vinylester-Ethylen-Copolymerphasen mit einem Ethylengehalt von 10 bis 30 Gew.-% gebildet werden.

3. Verfahren nach Anspruch 1 und 2, **dadurch gekennzeichnet, daß** die Vinylestermonomere und gegebenenfalls weitere Comonomere zu 20 bis 100 Gew.-%, bezogen auf das Gesamtgewicht der Monomere vorgelegt werden und der Rest zudosiert wird.

4. Verfahren nach Anspruch 1 bis 3, **dadurch gekennzeichnet, daß** die Vinylester in einer Menge von 30 bis 97 Gew.-%, und Ethylen in einer Menge von 3 bis 30 Gew.-%, jeweils bezogen auf das Gesamtgewicht der Monomere, copolymerisiert werden.

5. Verfahren nach Anspruch 1 bis 4, **dadurch gekennzeichnet, daß** Comonomergemische von Vinylacetat mit 3 bis 30 Gew.-%, Ethylen; oder
Comonomermischungen von Vinylacetat mit 3 bis 30 Gew.-%, Ethylen und 1 bis 50 Gew.-% von einem oder mehreren weiteren Comonomeren aus der Gruppe der Vinylester mit 1 bis 12 C-Atomen im Carbonsäurerest, oder
Gemische von Vinylacetat, 3 bis 30 Gew.-% Ethylen und 1 bis 60 Gew.-% Acrylsäureester von unverzweigten oder verzweigten Alkoholen mit 1 bis 15 C-Atomen, oder
Gemische mit 30 bis 75 Gew.-% Vinylacetat, 1 bis 50 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, welche noch 3 bis 30 Gew.-% Ethylen enthalten, oder
Gemische mit Vinylacetat, 3 bis 30 Gew.-% Ethylen und 1 bis 30 Gew.-% Vinylchlorid, copolymerisiert werden,
wobei die Gemische noch Hilfsmonomere in den genannten Mengen enthalten können, und sich die Angaben in Gew.-% auf jeweils 100 Gew.-% aufaddieren.

6. Verfahren nach Anspruch 1 bis 5, **dadurch gekennzeichnet, daß** die Polymerisation nach dem Emulsionspolymerisationsverfahren durchgeführt wird.

7. Verfahren nach Anspruch 1 bis 6, **dadurch gekennzeichnet, daß** die Polymerisation in Gegenwart von einem oder mehreren Schutzkolloiden durchgeführt wird, aus der Gruppe umfassend teilverseifte Polyvinylalkohole und teilverseifte, hydrophob modifizierte Polyvinylalkohole, jeweils mit einem Hydrolysegrad von 80 bis 95 Mol-% und einer Höpplerviskosität,in 4 %-iger wässriger Lösung von 1 bis 30 mPas.

8. Verfahren nach Anspruch 1 bis 7, **dadurch gekennzeichnet, daß** die Trocknung der damit erhaltenen wässrigen Dispersion mittels Sprühtrocknung, gegebenenfalls nach Zugabe weiterer Schutzkolloide als Verdüsungshilfe, erfolgt.

9. Zweiphasige Polymerisate auf Basis von Vinylester und Ethylen in Form deren wässrigen Polymerdispersionen oder in Wasser redispergierbaren Polymerpulver erhältlich nach einem der Verfahren gemäß Anspruch 1 bis 8, **dadurch gekennzeichnet, daß** die Differenz der Glasübergangstemperatur Tg der beiden Polymerphasen 5°C bis 30°C beträgt.

10. Zweiphasige Polymerisate gemäß Anspruch 9, **dadurch gekennzeichnet, daß** die beiden Polymerphasen statistisch verteilt über alle Volumenelemente der Polymerpartikel vorliegen.

11. Verwendung der Verfahrensprodukte gemäß Anspruch 1 bis 10 als Rezepturbestandteil, gegebenenfalls in Verbindung mit anorganischen, hydraulisch abbindenden Bindemitteln in Bauklebern, Putzen, Spachtelmassen, Fußbodenspachtelmassen, Verlaufsmassen, Dichtschlämmen, Fugenmörtel und Farben.

12. Verwendung der Verfahrensprodukte gemäß Anspruch 1 bis 10 als Bindemittel für Beschichtungsmittel, Farben und Klebemittel.

13. Verwendung der Verfahrensprodukte gemäß Anspruch 1 bis 10 als Beschichtungs- und Bindemittel für Textilien und Papier.

## Claims

1. Process for preparing two-phase polymers based on vinyl ester and ethylene in the form of their aqueous polymer dispersions or water-redispersible polymer powders by means of free-radically initiated emulsion polymerization or suspension polymerization of one or more monomers from the group of the vinyl esters of carboxylic acids having 1 to 12 carbon atoms, ethylene and, if desired, further monomers copolymerizable therewith in the presence of one or more protective colloids and/or emulsifiers and, if desired, drying of the resultant aqueous polymer dispersion, **characterized in that** it comprises operating in a first polymerization phase at a low ethylene pressure of p ≤ 20 bar and in a second polymerization phase raising the pressure to a level of 20 bar < p < 60 bar,
setting an ethylene distribution in the polymer of <50% by weight in the first polymerization phase and of >50% by weight in the second polymerization phase, based in each case on the total amount of ethylene used.

2. Process according to Claim 1, **characterized in that** in the first phase of the polymerization vinyl ester-ethylene copolymer phases having an ethylene content of from 2 to 10% by weight, and in the second phase of the polymerization vinyl ester-ethylene copolymer phases having an ethylene content of from 10 to 30% by weight, are formed.

3. Process according to Claim 1 or 2, **characterized in that** from 20 to 100% by weight of the vinyl ester monomers and any further comonomers, based on the overall weight of the monomers, are included in the initial charge and the remainder is metered in.

4. Process according to any of Claims 1 to 3, **characterized in that** the vinyl esters are copolymerized in an amount of from 30 to 97% by weight and ethylene is copolymerized in an amount of from 3 to 30% by weight, based in each case on the overall weight of the monomers.

5. Process according to any of Claims 1 to 4, **characterized in that** comonomer mixtures of vinyl acetate with from 3 to 30% by weight of ethylene; or
comonomer mixtures of vinyl acetate with from 3 to 30% by weight of ethylene and from 1 to 50% by weight of one or more further comonomers from the group of the vinyl esters having 1 to 12 carbon atoms in the carboxylic acid radical, or
mixtures of vinyl acetate, from 3 to 30% by weight of ethylene and from 1 to 60% by weight of acrylic esters of branched or unbranched alcohols having from 1 to 15 carbon atoms, or
mixtures with from 30 to 75% by weight of vinyl acetate, from 1 to 50% by weight of vinyl laurate or vinyl esters of an α-branched carboxylic acid having 9 to 11 carbon atoms, and from 1 to 30% by weight of acrylic esters of branched or unbranched alcohols having 1 to 15 carbon atoms, which also contain from 3 to 30% by weight of ethylene, or
mixtures with vinyl acetate, from 3 to 30% by weight of ethylene and from 1 to 30% by weight of vinyl chloride are copolymerized,
the mixtures may further contain auxiliary monomers in the stated amounts, and the amounts in % by weight add up to 100% by weight in each case.

6. Process according to any of Claims 1 to 5, **characterized in that** the polymerization is conducted by the emulsion polymerization process.

7. Process according to any of Claims 1 to 6, **characterized in that** the polymerization is conducted in the presence of one or more protective colloids from the group consisting of partially saponified polyvinyl alcohols and partially saponified, hydrophobically modified polyvinyl alcohols, each having a degree of hydrolysis of from 80 to 95 mol% and a Höppler viscosity in a 4% strength aqueous solution of from 1 to 30 mPas.

8. Process according to any of Claims 1 to 7, **characterized in that** the drying of the aqueous dispersion obtained thereby takes place by means of spray drying, with or without the addition of further protective colloids as spraying aids.

9. Two-phase polymer based on vinyl ester and ethylene in the form of its aqueous dispersion or water-redispersible powder, obtainable by the process according to any of Claims 1 to 8, **characterized in that** the difference of the glass transition temperature Tg of the two polymer phases is from 5°C to 30°C.

10. Two-phase polymer according to Claim 9, **characterized in that** the two polymer phases are present in random distribution over all of the volume elements of the polymer particles.

11. Use of the process products according to any of Claims 1 to 10 as formulation constituents, alone or in conjunction with inorganic, hydraulically setting binders, in building adhesives, plasters and renders, filling compounds, trowel-applied flooring compounds, levelling compounds, grouts, jointing mortars, and paints.

12. Use of the process products according to any of Claims 1 to 10 as binders for coating compositions, paints, and adhesives.

13. Use of the process products according to any of Claims 1 to 10 as coating and binding materials for textiles and paper.

## Revendications

1. Procédé de préparation de polymères biphasiques à base d'ester vinylique et d'éthylène sous la forme de leurs dispersions polymères aqueuses ou de poudres polymères redispersables dans l'eau, par polymérisation en émulsion à amorçage radicalaire ou polymérisation en suspension d'un ou de plusieurs monomères parmi le groupe constitué des esters vinyliques d'acides carboxyliques ayant de 1 à 12 atomes de carbone, de l'éthylène et éventuellement d'autres monomères copolymérisables avec ceux-ci, en présence d'un ou de plusieurs colloïdes protecteurs et/ou émulsifiants, et éventuellement par séchage de la dispersion polymère aqueuse ainsi obtenue, **caractérisé en ce que**
on opère dans une première phase de polymérisation à une faible pression d'éthylène de p ≤ 20 bars et on augmente la pression dans une deuxième phase de polymérisation jusqu'à une valeur de 20 bars < p < 60 bars,
en établissant une distribution d'éthylène dans le polymère de < 50 % en poids dans la première phase de polymérisation et de > 50 % en poids dans la deuxième phase de polymérisation, dans chaque cas par rapport à la quantité totale de l'éthylène utilisé.

2. Procédé selon la revendication 1, **caractérisé en ce que** dans la première phase de la polymérisation, il se forme des phases de copolymère ester vinylique/éthylène présentant une teneur en éthylène de 2 à 10 % en poids, et dans la deuxième phase de la polymérisation, il se forme des phases de copolymère ester vinylique/éthylène présentant une teneur en éthylène de 10 à 30 % en poids.

3. Procédé selon les revendications 1 et 2, **caractérisé en ce que** de 20 à 100 % en poids des monomères esters vinyliques et éventuellement d'autres comonomères, par rapport au poids total des monomères, sont introduits initialement et le reste est ajouté en quantité mesurée.

4. Procédé selon les revendications 1 à 3, **caractérisé en ce que** les esters vinyliques sont copolymérisés en une quantité de 30 à 97 % en poids, et l'éthylène en une quantité de 3 à 30 % en poids, dans chaque cas par rapport au poids total des monomères.

5. Procédé selon les revendications 1 à 4, **caractérisé en ce que** l'on procède à la copolymérisation de mélanges de comonomères d'acétate de vinyle avec de 3 à 30 % en poids d'éthylène ; ou
de mélanges de comonomères d'acétate de vinyle avec de 3 à 30 % en poids d'éthylène et de 1 à 50 % en poids d'un ou de plusieurs autres comonomères parmi le groupe constitué des esters vinyliques ayant de 1 à 12 atomes de carbone dans le radical acide carboxylique, ou
de mélanges d'acétate de vinyle, de 3 à 30 % en poids d'éthylène et de 1 à 60 % en poids d'esters acryliques ou d'alcools non ramifiés ou ramifiés ayant de 1 à 15 atomes de carbone, ou
de mélanges avec de 30 à 75 % en poids d'acétate de vinyle, de 1 à 50 % en poids de laurate de vinyle ou d'esters vinyliques d'un acide carboxylique ramifié en alpha ayant de 9 à 11 atomes de carbone, ainsi que de 1 à 30 % en poids d'esters acryliques d'alcools non ramifiés ou ramifiés ayant de 1 à 15 atomes de carbone, qui renferment également de 3 à 30 % en poids d'éthylène, ou
de mélanges avec de l'acétate de vinyle, de 3 à 30 % en poids d'éthylène et de 1 à 30 % en poids de chlorure de vinyle,
les mélanges pouvant également comprendre des monomères auxiliaires dans les quantités mentionnées, et la somme des données en % en poids étant, dans chaque cas, de 100 % en poids.

6. Procédé selon les revendications 1 à 5, **caractérisé en ce que** la polymérisation est réalisée conformément au procédé de polymérisation en émulsion.

7. Procédé selon les revendications 1 à 6, **caractérisé en ce que** la polymérisation est réalisée en présence d'un ou de plusieurs colloïdes protecteurs, parmi le groupe constitué d'alcools polyvinyliques partiellement saponifiés et d'alcools polyvinyliques partiellement saponifiés et à modification hydrophobe, présentant dans chaque cas un degré d'hydrolyse de 80 à 95 % en moles et une viscosité Höppler de 1 à 30 mPas en solution aqueuse à 4 %.

8. Procédé selon les revendications 1 à 7, **caractérisé en ce que** le séchage de la dispersion aqueuse ainsi obtenue est réalisé par séchage par pulvérisation, éventuellement après addition d'autres colloïdes protecteurs en tant qu'auxiliaires de pulvérisation.

9. Polymères biphasiques à base d'ester vinylique et d'éthylène sous la forme de leurs dispersions polymères aqueuses ou de poudres polymères redispersables dans l'eau, pouvant être obtenus conformément à l'un des procédés selon les revendications 1 à 8, **caractérisés en ce que** la différence de température de transition vitreuse Tv des deux phases de polymère est de 5°C à 30°C.

10. Polymères biphasiques selon la revendication 9, **caractérisés en ce que** les deux phases de polymère sont présentes en distribution aléatoire sur l'ensemble des éléments volumiques des particules polymères.

11. Utilisation des produits de procédé selon les revendications 1 à 10, en tant que constituants de formulations, éventuellement en association avec des liants inorganiques à prise hydraulique, dans des adhésifs de construction, dans des enduits, des mastics, des mastics pour planchers, des compositions nivelantes, des boues d'étanchéité, des mortiers de joints et des peintures.

12. Utilisation des produits de procédé selon les revendications 1 à 10, en tant que liants pour des compositions de revêtements, des peintures et des adhésifs.

13. Utilisation des produits de procédé selon les revendications 1 à 10, en tant que compositions de revêtements et liants pour textiles et papier.
